# EUROPEAN PATENT SPECIFICATION

(11) **EP 4 092 963 B1**
(45) Date of publication and mention of the grant of the patent: **08.05.2024**
(21) Application number: 21305662.5
(22) Date of filing: 20.05.2021
(51) Int. Cl.: H04L 41/082, H04L 41/0893

(54) **METHOD AND SYSTEM FOR DATACENTER NETWORK DEVICE MAINTENANCE**
VERFAHREN UND SYSTEM ZUR WARTUNG VON NETZWERKVORRICHTUNGEN IN RECHENZENTREN
PROCÉDÉ ET SYSTÈME DE MAINTENANCE DE DISPOSITIF DE RÉSEAU DE CENTRE DE DONNÉES

(43) Date of publication of application: 23.11.2022
(73) Proprietor: OVH, 59100 Roubaix (FR)
(72) Inventor: MONET, Maxime, 59178 Hasnon (FR); DESMASURES, Ludovic, 35160 Talensac (FR)
(74) Representative: BCF Global

(56) References cited:
- US-A1- 2011 321 031
- US-A1- 2013 151 681
- GONG GUOWEN ET AL: "Optimal Rack-Coordinated Updates in Erasure-Coded Data Centers", IEEE INFOCOM 2021 - IEEE CONFERENCE ON COMPUTER COMMUNICATIONS, IEEE, 10 May 2021 (2021-05-10), pages 1-10, XP033947057, DOI: 10.1109/INFOCOM42981.2021.9488813 [retrieved on 2021-07-15]
- SHEN ZHIRONG ET AL: "Cross-Rack-Aware Updates in Erasure-Coded Data Centers: Design and Evaluation", IEEE TRANSACTIONS ON PARALLEL AND DISTRIBUTED SYSTEMS, IEEE SERVICE CENTER, LOS ALAMITOS, CA, US, vol. 31, no. 10, 28 April 2020 (2020-04-28), pages 2315-2328, XP011788164, ISSN: 1045-9219, DOI: 10.1109/TPDS.2020.2991021 [retrieved on 2020-05-12]

## Description

### FIELD

The present technology relates to information technology, more particularly to a method and system for automated maintenance of network devices in a datacenter.

### BACKGROUND

Systems have been developed that purport to support maintenance of network devices, such as switches, routers, etc. in a datacenter. "Maintenance" as used herein, may include for example performing upgrade of devices from current to targeted (ex: up-to-date) network operating system. "Datacenter" as used herein, is not limited to the infrastructure located within physical boundaries of one server farm, but rather comprises all infrastructure, whether local or remote, that an organization deploys, controls and maintains to provide services based on computer clustering, to its own internal services, or to third party entities, altogether clients of the organization. Systems achieving automation of maintenance of network devices populating a datacenter while saving on the required manpower, avoiding human errors, and managing client impact, have been long in demand. US Patent application N°2011/0321031 published December 29, 2011, for example discloses a system for deploying an upgrade concurrently on a plurality of nodes propagated throughout a distributed computing platform.

Challenges to the development of such systems however have been, beyond the mere quantity of network devices to address, the diversity of such devices in the datacenter, including their properties and their role. For example, a datacenter network may be composed of different architectures working side by side to offer connectivity and services, with each of those architectures having been designed with and for specific properties, hardware models, enabled features and/or levels of redundancy, and all those parallel architectures having been connected to a more central architecture or core network.

Challenges to such development have also been to minimize the disruption to the functioning of the datacenter, and to ensure that unavailability of part or all of the datacenter owing to the maintenance of network devices be as limited as possible. This allows in turn to minimize disruption in the network connectivity service provided to clients by the organization, meeting contractual quality of service commitments as the case may be.

There is therefore a need for a method and system that allow a datacenter operator with no specific network knowledge to automate massive network device maintenance campaigns using a simple entry point, by providing a list of network devices to upgrade, and inputting some simple options if and when required.

Generally speaking, the present technology aims at automating maintenance of network devices in a datacenter, by removing from automated maintenance those network devices with a higher risk of failed automated maintenance, and exploiting redundancy of the remaining network devices so as to limit downtime in the datacenter owing to maintenance operations.

The subject matter discussed in the background section should not be assumed to be prior art merely as a result of its mention in the background section. Similarly, a problem mentioned in the background section or associated with the subject matter of the background section should not be assumed to have been previously recognized in the prior art. The subject matter in the background section merely represents different approaches.

### SUMMARY

Embodiments of the present technology have been developed based on developers' appreciation of shortcomings associated with the prior art. The invention is defined in the independent claims. Particular embodiments are set out in the dependent claims.

The present technology offers a method and system that will execute the exact same maintenance process when network devices conform to the same parameters (architecture, role, hardware model, running software release, and/or enabled features, etc.), so that risks of human error may be removed. An adjusted amount of parallel execution will limit the impact with unavailability of the datacenter. Disruption of the network connectivity services provided to clients will be minimized through identification of redundancy in the infrastructure of network devices that share certain parameters or characteristics, and non-simultaneous maintenance of such network devices, so as to possibly downgrade the service, yet not interrupt it entirely. Further, such method and system will allow the datacenter operator to easily account for new device hardware or new architectures between devices.

In the context of the present description, unless expressly provided otherwise, a system, may refer, but is not limited to, an "electronic device", an "operation system", a "computing system", a "computer-based system", a "controller unit", a "monitoring device", a "control device" and/or any combination thereof appropriate to the relevant task at hand.

In the context of the present description, the functional steps shown in the figures, may be provided through use of dedicated hardware, as well as hardware capable of executing software in association with appropriate software. Further, the functions of the various functional blocks shown in the figures, such as labeled « network device », « tool », « configurator », etc. may be provided through the use of dedicated hardware as well as hardware capable of executing software in association with appropriate software. When provided by a "processor", the functions may be provided by a single dedicated processor, by a single shared processor, or by a plurality of individual processors, some of which may be shared. In some embodiments of the present technology, the processor may be a general purpose processor, such as a central processing unit (CPU) or a processor dedicated to a specific purpose, such as a digital signal processor (DSP). In the aforementioned, explicit use of the term a « processor » should not be construed to refer exclusively to hardware capable of executing software, and may implicitly include, without limitation, application specific integrated circuit (ASIC), field programmable gate array (FPGA), read-only memory (ROM) for storing software, random access memory (RAM), and non-volatile storage. Other hardware, conventional and/or custom, may also be included.

In the context of the present description, "Tag" is intended to represent a key-value tuple associated with each datacenter network device, and stored in a database, for example a Configuration Management Database (CMDB). The key uniquely identifies a data element, and the value is the actual data or a pointer to the data as the case may be. The Tag is an access key to certain characteristics of the datacenter network device.

In the context of the present description, "BU" (for Business Unit) is intended to represent, as part of the Tag of a datacenter network device, a characteristic in relation to a business or product offering the datacenter network device is used for. The business or product offering may be that of the organization that deploys, controls and maintains the infrastructure, or of its clients'. For example, a BU may be server, cloud, hosting, etc. and depends on the granularity, diversity and complexity of a catalogue of business or product offerings.

In the context of the present description, "ROLE" is intended to represent, as part of the Tag of a datacenter network device, a characteristic in relation to the place and function the datacenter network device occupies in the datacenter network infrastructure. For example ROLE may be without limitation: "aggregation", "Top of Rack" (ToR), "End of Row" (EoR), "spine", "megaspine" etc.

In the context of the present description, "INFRA" is intended to represent, as part of the Tag of a datacenter network device, a characteristic in relation to the version or generation of the infrastructure, which may be evolving over time with enhancements and evolution, in which the datacenter network device is meant to operate.

In the context of the present description, "LOCATION" is intended to represent, as part of information associated with a datacenter network device, a characteristic in relation to the actual physical location of the datacenter network device in the datacenter. For example LOCATION may be without limitation: the name of a datacenter building, a particular datacenter room, etc.

In the context of the present description, "MANAGEMENT IP" is intended to represent, as part of information associated with a datacenter network device, a virtual identification, such as for example an IP address, uniquely associated with a datacenter network device, and allowing, through the use of for example an automation tool, to reach the datacenter network device and perform with it operations such as for example retrieving information, changing configuration, upgrading etc.

Still in the context of the present description, "a" computer-readable medium and "the" computer-readable medium should not be construed as being the same computer-readable medium. To the contrary, and whenever appropriate, "a" computer-readable medium and "the" computer-readable medium may also be construed as a first computer-readable medium and a second computer-readable medium.

Still in the context of the present description, unless expressly provided otherwise, the words "first", "second", "third", etc. have been used as adjectives only for the purpose of allowing for distinction between the nouns that they modify from one another, and not for the purpose of describing any particular relationship between those nouns.

Implementations of the present technology each have at least one of the above-mentioned object and/or aspects, but do not necessarily have all of them. It should be understood that some aspects of the present technology that have resulted from attempting to attain the above-mentioned object may not satisfy this object and/or may satisfy other objects not specifically recited herein.

Additional and/or alternative features, aspects and advantages of implementations of the present technology will become apparent from the following description, the accompanying drawings and the appended claims.

### BRIEF DESCRIPTION OF THE DRAWINGS

For a better understanding of the present technology, as well as other aspects and further features thereof, reference is made to the following description which is to be used in conjunction with the accompanying drawings, where:
Figure 1 depicts a datacenter environment in which the present technology may be used;
Figure 2 presents a broad overview of the method according to the present technology;
Figures 3a-3c provide a more detailed view of the method according to the present technology;
Figure 4 provides a logical illustration of a clustering/sub-clustering of network devices in a datacenter; and
Figure 5 illustrates a computing system that may be used in the present technology.

It should be noted that, unless otherwise explicitly specified herein, the drawings are not to scale. Further, elements that are identical from one figure to the next share the same reference numerals.

### DETAILED DESCRIPTION

The examples and conditional language recited herein are principally intended to aid the reader in understanding the principles of the present technology and not to limit its scope to such specifically recited examples and conditions. It will be appreciated that those skilled in the art may devise various arrangements that, although not explicitly described or shown herein, nonetheless embody the principles of the present technology and are included within its spirit and scope.

Furthermore, as an aid to understanding, the following description may describe relatively simplified implementations of the present technology. As persons skilled in the art would understand, various implementations of the present technology may be of a greater complexity.

In some cases, what are believed to be helpful examples of modifications to the present technology may also be set forth. This is done merely as an aid to understanding, and, again, not to define the scope or set forth the bounds of the present technology. These modifications are not an exhaustive list, and a person skilled in the art may make other modifications while nonetheless remaining within the scope of the present technology. Further, where no examples of modifications have been set forth, it should not be interpreted that no modifications are possible and/or that what is described is the sole manner of implementing that element of the present technology.

Moreover, all statements herein reciting principles, aspects, and implementations of the present technology, as well as specific examples thereof, are intended to encompass both structural and functional equivalents thereof, whether they are currently known or developed in the future. Thus, for example, it will be appreciated by those skilled in the art that any block diagrams herein represent conceptual views of illustrative circuitry embodying the principles of the present technology. Similarly, it will be appreciated that any flowcharts, flow diagrams, state transition diagrams, pseudo-code, and the like represent various processes that may be substantially represented in non-transitory computer-readable media and so executed by a computer or processor, whether or not such computer or processor is explicitly shown.

Software modules, or simply modules which are implied to be software, may be represented herein as any combination of flowchart elements or other elements indicating performance of process steps and/or textual description. Such modules may be executed by hardware that is expressly or implicitly shown. Moreover, it should be understood that module may include for example, but without being limitative, computer program logic, computer program instructions, software, stack, firmware, hardware circuitry or a combination thereof which provides the required capabilities.

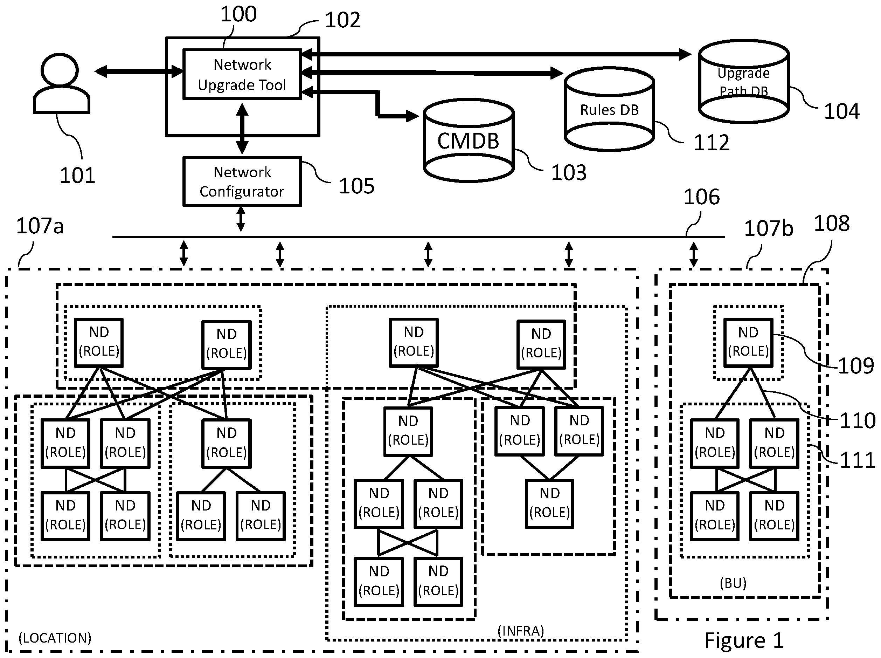

With these fundamentals in place, we will now consider some non-limiting examples to illustrate various implementations of aspects of the present technology. Figure 1 depicts a datacenter environment in which the present technology may be used. A Network Upgrade Tool 100 provides a datacenter operator 101 with an input/output interface allowing it to enter inputs and options toward automation of a network device maintenance campaign, and receive status and results about such campaign. Network Upgrade Tool 100 may be developed using the YAQL language (Yet Another Query Language) and may be interpreted as workflows inside an open-source software orchestrator that is used to launch and organize tasks, subtasks and standalone actions. For example, Network Upgrade Tool 100 may be part of a software stack 102 such as Mistral, which is one of the components of the OpenStack project: https://docs.openstack.org/mistral/latest/ . It will be apparent to the person skilled in the art that other language, software and software framework may be used still within the teachings of the present disclosure.

Network Upgrade Tool 100 may further interface with a Network Configurator 105, as an abstractive and unified Application Programming Interface (API) system that gives the ability to interact with network devices in the datacenter, regardless of diversity of their hardware models or network operating systems. Network Configurator 105 may have an interface 106 with the datacenter network devices.

Network Upgrade Tool 100 may further be coupled, and interface with a CMDB 103 that may reference network devices in the datacenter, and store for example Tags and MANAGEMENT IP in association with each of such referenced network devices, that Network Upgrade Tool 100 may retrieve. For example, upon deployment of each new network device in the datacenter, it may be given, for example by datacenter operator 101, a unique network device ID, and such network device ID may be used to retrieve from CMDB 103 the Tags and MANAGEMENT IP associated with the deployed network device.

Network Upgrade Tool 100 may further interface with an Upgrade Path DB 104 that may reference network devices in the datacenter, and store in association with each of such referenced network devices, or groups of such network devices as the case may be, a path to a targeted network operating system level (ie: all necessary intermediate operating system levels between the current level, and the targeted level) that Network Upgrade Tool 100 may retrieve and use for the automated maintenance.

Network Upgrade Tool 100 may further interface with a Rules DB 112 that may store rules that Network Upgrade Tool 100 may retrieve and use for the automated maintenance. For example, Network Upgrade Tool 100 may check conformity of certain network devices with certain rules. For example, rules may detail the expected redundancy of network devices in the datacenter sharing an identical INFRA Tag value. For example other rules may be applicable to network devices sharing an identical combination of BU - ROLE - INFRA Tag values.

It will be appreciated by the person skilled in the art that, although represented as three separate physical and logical entities, CMDB 103, Upgrade Path DB 104, and Rules DB 112 may, in all or in part, form part of the same physical and/or logical database, or be physically part of the Network Upgrade Tool 100, without affecting the generality of the teachings herein. Also, depending on the corporate and development environment of the organization that deploys, controls and maintains the infrastructure, Rules DB 112 may not even be a separate database, and rules may be hardcoded, for example in the Network Upgrade Tool 100.

The datacenter may comprise a plurality of network devices 109 interconnected through connections 110 in an infrastructure as seen, merely as a simplified example, on Figure 1. Each network device 109 may have associated with it, as part of its Tag(s):
- a ROLE;
- an INFRA 111; and
- a BU 108.
In addition, LOCATION information 107a-107b is also associated with each network device 109.

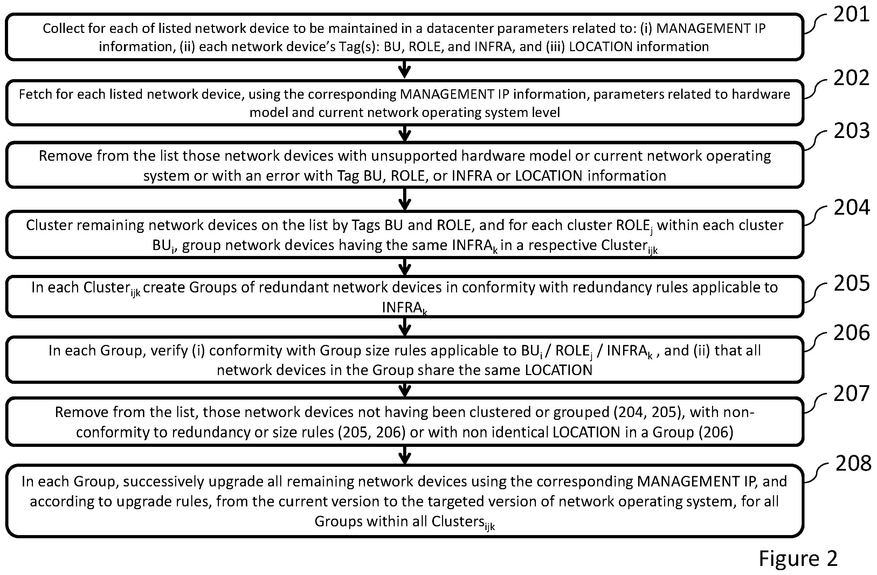

Figure 2 presents a broad overview of the method according to the present technology. At steps 201 and 202, certain parameters of network devices 109 to be maintained (that may be present in a list of devices to be maintained) in the datacenter may be collected/fetched. This includes at step 201: the Tag or Tags associated with each one of the network devices 109, including their BU, ROLE, INFRA, and their MANAGEMENT IP and LOCATION information. And this includes at step 202: fetching from the network devices 109, using their corresponding MANAGEMENT IP information, certain parameters related to their hardware model, and their current network operating system.

At step 203, may be removed from the maintenance list those network devices 109 with either hardware and software characteristics that are not supported (such as unsupported hardware model or current network operating system), ie that are not susceptible of automated maintenance by the present technology, or with an error with their BU, ROLE, INFRA Tag, or LOCATION information. For example, their network operating system level may not be a supported level, or their hardware model may be outdated or unrecognized. For example, their Tag(s) may not have a value recognized by the automated maintenance system of the present technology, or have (strictly) more or less than one single value for any of BU, ROLE, or INFRA Tag, etc.

At step 204, the remaining network devices 109 on the list may be clustered as follows:
- forming i clusters BUᵢ of network devices 109 sharing the same BU Tag;
- within each BUᵢ cluster, forming j clusters ROLEⱼ of network devices 109 sharing the same ROLE Tag;
- within each ROLEⱼ cluster, forming k clusters Clusterᵢⱼₖ, of network devices 109 sharing the same INFRA Tag.
The person skilled in the art will appreciate that another sequence of clustering network devices 109 than as described may be used to arrive at the construct of clusters Clusterᵢⱼₖ, still within the teachings of the present disclosure. For example, clusters may first be made of network devices 109 sharing the same ROLE Tag, then of network devices 109 sharing the same BU Tag, etc.

At step 205, in each formed Clusterᵢⱼₖ, redundancy between network devices 109 may be identified. This redundancy may be defined at INFRAₖ level, in redundancy rules that the automated system of the present technology may apply to group redundant network devices 109 in Groups within each Clusterᵢⱼₖ. A Group may include 1 (no redundancy for this network device), or 2 or more network devices 109.

At step 206, in each formed Group in a cluster Clusterᵢⱼₖ, conformity of the network devices 109 present in that Group, may be checked with specific size rules applicable to the particular combination of BU; - ROLEⱼ - INFRAₖ. For example, a size rule may indicate that all Groups in a cluster Clusterᵢⱼₖ must include 3 network devices 109. All network devices 109 that belong to a Group that includes (strictly) more of less than 3 network devices 109 are non conform. Further, a check may be performed that all network devices 109 in the Group share the same LOCATION information.

At step 207, may be removed from the maintenance list those network devices 109 not having been clustered or grouped at steps 204 and 205, non-conformity to redundancy or size rules, or not sharing the same LOCATION information when present in the same Group, after steps 205 and 206.

At step 208, the automated process according to the present technology may upgrade successively all remaining network devices 109 in a Group. Since such network devices 109 are redundant ones, disruption to the functioning of the datacenter, and to the network connectivity service provided to clients of the organization that deploys, controls and maintains the datacenter, is minimized, and the technical unavailability of part or all of the datacenter owing to the maintenance of network devices is as limited as possible. The same may be performed for all created Groups in a Clusterᵢⱼₖ, and for all formed Clustersᵢⱼₖ clusters. The same may be performed in parallel for a number of Clustersᵢⱼₖ clusters adjusted to increase the speed of the maintenance process, while minimizing the overall downtime of the datacenter and disruption of the service to clients of the organization that deploys, controls and maintains the datacenter. Further, the order in which Clustersᵢⱼₖ clusters are handled may also be adjusted to optimize the continuation of services to clients of the organization.

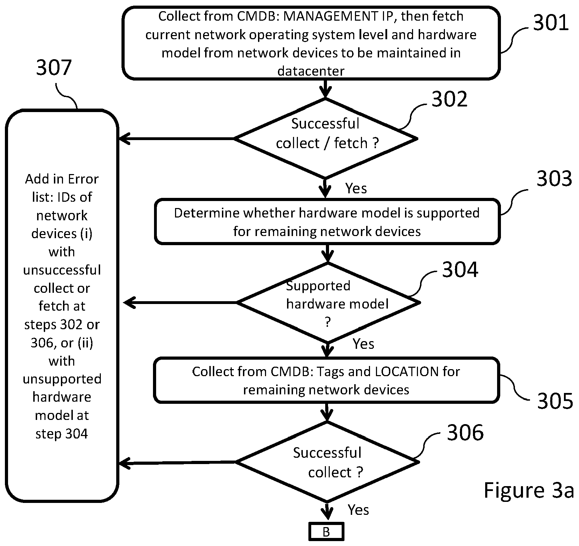

Figures 3a-3c provide a more detailed view of the method according to the present technology. Referring to figure 3a, at step 301, fetching of the information of the level of current network operating system and of the hardware model, may be attempted with network devices to be maintained in the datacenter. These network devices may be listed through a list of IDs on a Maintenance list. Referring back to Figure 1, this may for example be performed by: (i) providing (by the datacenter operator 101 or otherwise) to Network Upgrade Tool 100 a Maintenance list of network device IDs, (ii) Network Upgrade Tool 100 collecting the corresponding MANAGEMENT IPs from CMDB 103, and (iii) Network Upgrade Tool 100 using the retrieved corresponding MANAGEMENT IPs to query the network devices to be maintained for information of the level of current network operating system and of the hardware model. The collecting/fetching is not necessarily successful, and IDs of network devices for which it was unsuccessful may be added to an Error list at steps 302 with 307 and be removed from the Maintenance list.

At step 303, a determination may be made, for remaining network devices on the Maintenance list (ie: those network devices for which the ID was not added to the Error list after steps 301/302), whether the hardware model fetched at step 301, is a supported one. "Supported hardware model" as used herein, means a hardware model that maintenance operations of the datacenter are capable of handling. Referring back to Figure 1, this may for example be performed by: (i) storing (by the datacenter operator 101 or otherwise) in the Rules DB 112 the supported hardware models, (ii) Network Upgrade Tool 100 retrieving those supported hardware models from Rules DB 112, and (iii) Network Upgrade Tool 100 comparing the retrieved supported hardware models with the hardware models fetched at step 301. If the determination is unsuccessful or the hardware model is not a supported one, IDs of corresponding network devices may be added to the Error list at steps 304 with 307 and be removed from the Maintenance list.

At step 305, collecting of the information of the Tags, and LOCATION and MANAGEMENT IP information, may be attempted with remaining network devices on the Maintenance list to be maintained in the datacenter. This may be performed by the Network Upgrade Tool 100 collecting that information from CMDB 103. The collecting is not necessarily successful, and IDs of network devices for which it was unsuccessful may be added to the Error list at steps 306 with 307 and be removed from the Maintenance list.

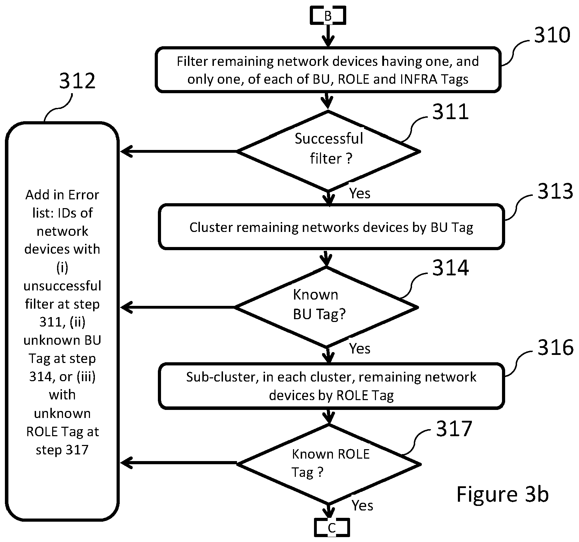

Referring to figure 3b, at step 310, determination may be made, for remaining network devices on the Maintenance list, whether such network devices have one, and only one, value for Tags BU, ROLE and INFRA respectively (as fetched at step 305). IDs of network devices having no value in any of BU, ROLE or INFRA Tag, or more than one value, may be added to the Error list at steps 311 with 312, and be removed from the Maintenance list.

At step 313, remaining network devices on the Maintenance list may be grouped in clusters sharing the same BU Tag. IDs of network devices having a not known/recognized value in BU, may be added to the Error list at steps 314 with 312, and be removed from the Maintenance list.

At step 316, remaining network devices on the Maintenance list may be grouped, in each BU cluster, in sub-clusters sharing the same ROLE Tag. IDs of network devices having a not known/recognized value in ROLE, may be added to the Error list at steps 317 with 312, and be removed from the Maintenance list.

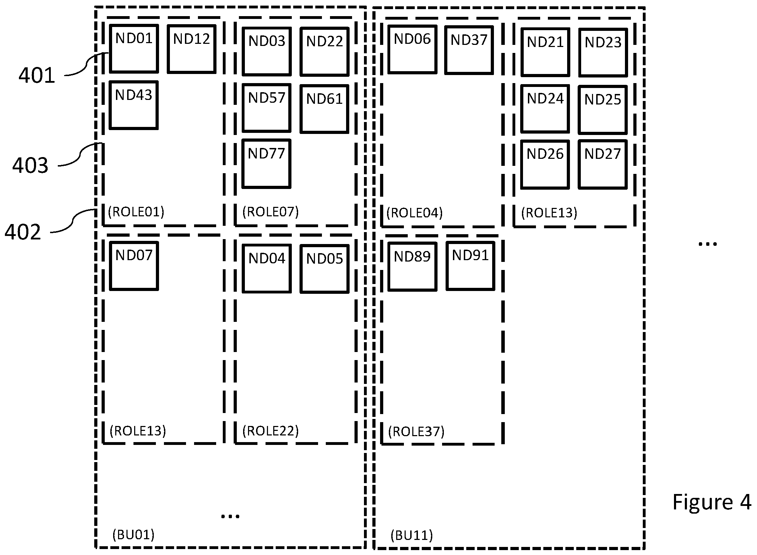

Figure 4 provides a logical illustration of a clustering/sub-clustering of network devices in a datacenter according to steps 313 and 316 in Figure 3b. Only a portion of the datacenter network devices 401 is represented. Network devices 401 each possess a unique ID that has been illustrated as "NDxx". As a result of step 313, network devices 401 have been clustered each in a BU cluster 402, illustrated as BU01 and BU11. As a result of step 316, network devices 401 have been sub-clustered each in a ROLE sub-cluster 403, illustrated as ROLE01, ROLE07, ROLE13, etc.

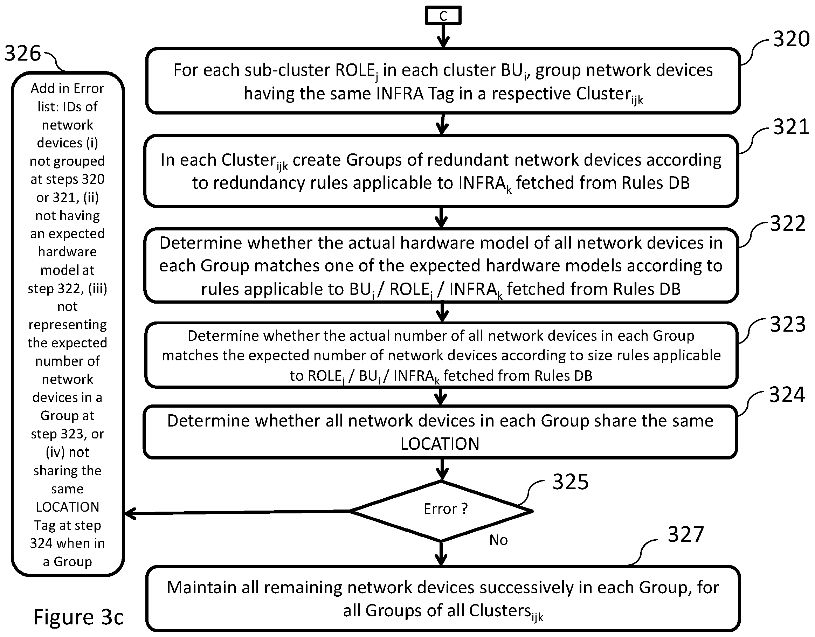

Returning now to Figure 3c, at step 320, for each cluster BUᵢ created at step 313, and each sub-cluster ROLEⱼ created at step 316, network devices may further be grouped in sub-sub-clusters Clusterᵢⱼₖ that are sharing the same INFRA Tag k (INFRAₖ).

At step 321, network devices that appear to be redundant in each Clusterᵢⱼₖ, according to redundancy rules applicable to the corresponding INFRAₖ, may further be grouped yet in Groups of redundant network devices. Referring back to Figure 1, this may for example be performed by: (i) storing (by the datacenter operator 101 or otherwise) in the Rules DB 112 redundancy rules particular to INFRAₖ, (ii) Network Upgrade Tool 100 retrieving those redundancy rules from Rules DB 112, and (iii) Network Upgrade Tool 100 grouping network devices in Groups in each Clusterᵢⱼₖ according to those redundancy rules. The rules may for example be a normalization of IDs of network devices, that will inherently carry the redundancy information. For example, rules may be that IDs of redundant network devices in an INFRAₖ, end with the same chain of characters specific to that INFRAₖ.

At step 322, network devices present in each Group may be checked for their hardware model being one of one or several expected hardware models, according to rules applicable to the corresponding combination BUᵢ - ROLEⱼ - INFRAₖ. Referring back to Figure 1, this may for example be performed by: (i) storing (by the datacenter operator 101 or otherwise) in the Rules DB 112 hardware model expectancy rules particular to BUᵢ - ROLEⱼ - INFRAₖ, (ii) Network Upgrade Tool 100 retrieving those hardware model expectancy rules from Rules DB 112, and (iii) Network Upgrade Tool 100 checking network devices in Groups in each Clusterᵢⱼₖ against those hardware model expectancy rules.

At step 323, the actual number of network devices present in each Group may be checked, according to size rules applicable to the corresponding combination BUᵢ - ROLEⱼ - INFRAₖ. Referring back to Figure 1, this may for example be performed by: (i) storing (by the datacenter operator 101 or otherwise) in the Rules DB 112 size (number of network devices expectancy) rules particular to BUᵢ - ROLEⱼ - INFRAₖ, (ii) Network Upgrade Tool 100 retrieving those size rules from Rules DB 112, and (iii) Network Upgrade Tool 100 checking the number of network devices in Groups in each Clusterᵢⱼₖ against those size rules.

At step 324, it may be verified that all network devices present in each Group share the same LOCATION information. This LOCATION information was available to the Network Upgrade Tool 100 from step 305.

At steps 325 and 326, all network devices that were not grouped at steps 320 or 321, that did not match one of the expected hardware models at step 322, that were not totalling in a Group an expected number at step 323, or that did not share the same LOCATION when in the same Group, may be added to the Error list, and be removed from the Maintenance list.

At step 327, the remaining network devices on the Maintenance list may be maintained: this is performed successively for all network devices in a Group, for all Clusterᵢⱼₖ. Referring back to Figure 1, this may for example be performed by: (i) storing (by the datacenter operator 101 or otherwise) in the Upgrade Path DB 104 upgrade rules to take a network device from a current network operating system level to the targeted network operating system level, (ii) Network Upgrade Tool 100 retrieving those upgrade rules from Upgrade Path DB 104, and (iii) Network Upgrade Tool 100 applying the upgrades through Network Configurator 105.

Through the present technology, network devices involved in providing identical service to identical clients of the datacenter have been identified and grouped together, and maintenance has been performed successively through all network devices belonging in a group, after removal of those network devices that did not conform and for which automated maintenance is too risky. Thus, the service is not completely interrupted, merely downgraded as the case may.

The person skilled in the art will appreciate that the granularity of the Error list referred to at steps 307, 312 and 326 may be higher, by keeping track of the cause for error. For example, the Error list may be broken down in sub-lists allowing to distinguish between (i) errors that the datacenter operator 101 may be able to correct, such as Tags, classification, identification, and (ii) errors that are linked to a faulty network device such as through its network operating system level, etc.

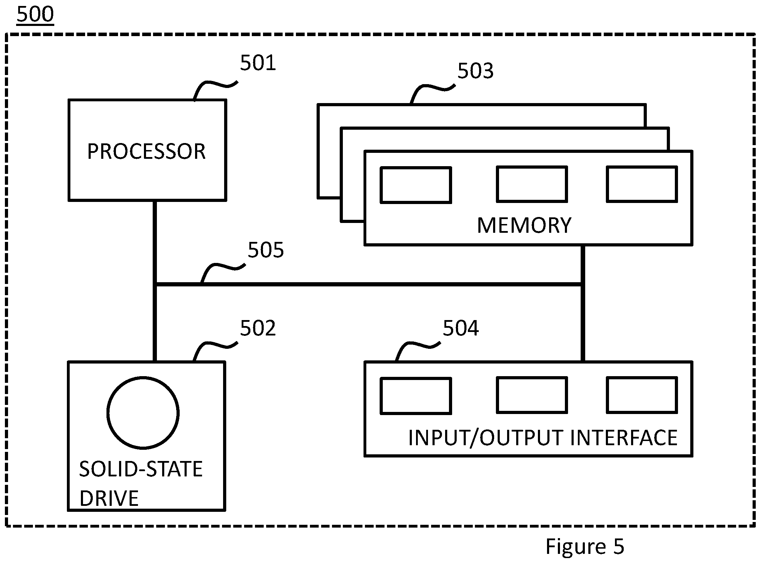

Figure 5 illustrates a computing system that may be used in the present technology. An example of implementation of computing system 500 that may be used for the Network Upgrade Tool 100 and/or the Network Configurator 105 is presented. As will be appreciated by the person skilled in the art, such computing system may be implemented in any other suitable hardware, software, and/or firmware, or a combination thereof, and may be a single physical entity, or several separate physical entities with a distributed functionality.

In some aspects of the present technology, the Computing System 500 may comprise various hardware components including one or more single or multi-core processors collectively represented by a processor 501, a solid-state drive 502, a memory 503 and an input/output interface 504. In this context, the processor 501 may or may not be included in a FPGA. In some other aspect, the Computing System 500 may be an "off the shelf' generic computing system. In some aspect, the Computing System 500 may also be distributed amongst multiple systems. The Computing System 500 may also be specifically dedicated to the implementation of the present technology. As a person in the art of the present technology may appreciate, multiple variations as to how the Computing System 500 is implemented may be envisioned without departing from the scope of the present technology.

Communication between the various components of the Computing System 500 may be enabled by one or more internal and/or external buses 505 (e.g. a PCI bus, universal serial bus, IEEE 1394 "Firewire" bus, SCSI bus, Serial-ATA bus, ARINC bus, etc.), to which the various hardware components are electronically coupled.

The input/output interface 504 may allow enabling networking capabilities such as wire or wireless access. As an example, the input/output interface 504 may comprise a networking interface such as, but not limited to, a network port, a network socket, a network interface controller and the like. Multiple examples of how the networking interface may be implemented will become apparent to the person skilled in the art of the present technology. According to implementations of the present technology, the solid-state drive 502 may store program instructions, such as those part of, for example, a library, an application, etc. suitable for being loaded into the memory 503 and executed by the processor 501 for the method and process steps according to the present technology.

While the above-described implementations have been described and shown with reference to particular steps performed in a particular order, it will be understood that these steps may be combined, sub-divided, or re-ordered without departing from the teachings of the present disclosure. At least some of the steps may be executed in parallel or in series. Accordingly, the order and grouping of the steps is not a limitation of the present technology. It should further be expressly understood that not all technical effects mentioned herein need to be enjoyed in each and every embodiment of the present technology.

The foregoing description is intended to be exemplary rather than limiting. The scope of the present technology is therefore intended to be limited solely by the scope of the appended claims.

## Claims

1. A method for maintenance of network devices in a datacenter, comprising:
- collecting (201) for each one of the network devices on a Maintenance list:
- a virtual identification uniquely associated with the network device, MANAGEMENT IP;
- an information representative of the actual physical location of the network device, LOCATION; and
- key-value tuples associated with the network device, Tags, wherein the key is one of:
- an information representative of a business or product offering the network device is used for in the datacenter, BU;
- an information representative of a place and function the network device occupies in the datacenter, ROLE; and
- an information representative a version or generation of the datacenter in which the network device operates, INFRA;
and wherein the value is an actual data or pointer to the data for the key;
- fetching (202) for each one of the network devices on the Maintenance list, using the respective MANAGEMENT IP, a hardware model and a current network operating system level of the network device;
- removing (203) from the Maintenance list network devices with unsupported hardware model or current network operating system level, or with an error in any of their respective associated BU, ROLE, and INFRA Tags, or in any of their LOCATION;
- clustering (204) the remaining network devices on the Maintenance list, in i clusters BUᵢ of those network devices having the same value of BU key in one of their associated Tags, j clusters ROLEⱼ within BUᵢ clusters, of those network devices having the same value of ROLE key in one of their associated Tags, and k clusters Clusterᵢⱼₖ within ROLEⱼ clusters of those network devices having the same value of INFRA key in one of their associated Tags;
- creating (205) within each Clusterᵢⱼₖ cluster, Groups of network devices that are redundant, and:
- verifying (205) that the number of redundant network devices in each created Group matches a first quantity applicable, according to redundancy rules, to INFRAₖ;
- verifying (206) that the number of network devices in each created Group matches a second quantity applicable, according to size rules, to a combination BUᵢ - ROLEⱼ - INFRAₖ; and
- verifying (206) that all network devices in each created Group share the same LOCATION;
- removing (207) from the Maintenance list network devices present and redundant in a Group in a quantity that does not match the first quantity, present in a Group in a quantity that does not match the second quantity, or present in a Group and not sharing the same LOCATION; and
- successively upgrading (208) , using upgrade rules and the respective MANAGEMENT IP, the remaining network devices in each created Group, for all Groups within all Clusterᵢⱼₖ clusters, from the current version of network operating system to a targeted version of operating system.

2. The method of claim 1, wherein the collecting and the fetching is performed using a unique ID assigned by a datacenter operator at deployment of the datacenter to each one of the network devices on the Maintenance list, and associated to any of its associated Tags, and MANAGEMENT IP and LOCATION.

3. The method of claim 1 or 2, wherein the removing from the Maintenance list further comprises removing network devices not having exactly one value for each of BU, ROLE, and INFRA Tags.

4. The method of claim 2, or 3 when dependent upon claim 2, wherein the removing from the Maintenance list further comprises creating an Error list populated with the unique IDs of removed network devices.

5. The method of claim 4, wherein the Error list further comprises sub-lists for errors that may be corrected by the datacenter operator, and for errors linked to a faulty network device.

6. The method of any of the claims 1 to 5, wherein the successively upgrading further comprises adjusting the number of Clusterᵢⱼₖ clusters handled in parallel to minimize the downtime of the datacenter.

7. The method of any of the claims 1 to 6, wherein the successively upgrading further comprises adjusting the order in which Clusterᵢⱼₖ clusters are handled to optimize the continuation of services to clients of an organization that deploys, controls and maintains the datacenter.

8. A system for maintenance of network devices in a datacenter, the system comprising a Network Upgrade Tool (100) coupled to a CMDB (103), a Rules DB (112), an upgrade Path DB (104) and a Network Configurator (105), the Network Upgrade Tool being configured to:
- collect (201) from the CMDB for each one of the network devices on a Maintenance list:
- a virtual identification uniquely associated with the network device, MANAGEMENT IP;
- an information representative of the actual physical location of the network device, LOCATION; and
- key-value tuples associated with the network device, Tags, wherein the key is one of:
- an information representative of a business or product offering the network device is used for in the datacenter, BU;
- an information representative of a place and function the network device occupies in the datacenter, ROLE; and
- an information representative a version or generation of the datacenter in which the network device operates, INFRA;
and wherein the value is an actual data or pointer to the data for the key;
- fetch (202) for each one of the network devices on the Maintenance list, using the respective MANAGEMENT IP, a hardware model and a current network operating system level of the network device;
- remove (203) from the Maintenance list network devices with unsupported hardware model or current network operating system level, or with an error in any of their respective associated BU, ROLE, and INFRA Tags, or in any of their LOCATION;
- cluster (204) the remaining network devices on the Maintenance list, in i clusters BUᵢ of those network devices having the same value of BU key in one of their associated Tags, j clusters ROLEⱼ within BUᵢ clusters, of those network devices having the same value of ROLE key in one of their associated Tags, and in k clusters Clusterᵢⱼₖ within ROLEⱼ clusters of those network devices having the same value of INFRA key in one of their associated Tags;
- create (205) within each Clusterᵢⱼₖ cluster, Groups of network devices that are redundant according to redundancy rules collected from the Rules DB applicable to INFRAₖ; and
- verify (205) that the number of redundant network devices in each created Group matches a first quantity applicable, according to redundancy rules, to INFRAₖ;
- verify (206) that the number of network devices in each created Group matches a second quantity applicable, according to size rules, to a combination BUᵢ - ROLEⱼ - INFRAₖ, and
- verify (206) that all network devices in each created Group share the same LOCATION;
- remove (207) from the Maintenance list network devices present and redundant in a Group in a quantity that does not match the first quantity, present in a Group in a quantity that does not match the second quantity, or present in a Group and not sharing the same LOCATION; and
- successively upgrade (208), through the Network Configurator, using upgrade rules collected from the Upgrade Path DB and the respective MANAGEMENT IP, the remaining network devices in each created Group, for all Groups within all Clusterᵢⱼₖ clusters, from the current version of network operating system to a targeted version of operating system.

9. The system of claim 8, wherein the Network Upgrade Tool is further configured to collect and fetch using a unique ID assigned by a datacenter operator at deployment of the datacenter to each one of the network devices on the Maintenance list, and associated to any of its associated Tags, and MANAGEMENT IP and LOCATION.

10. The system of claim 8 or 9 when dependent upon claim 8, wherein the Network Upgrade Tool is further configured to create an Error list populated with the unique IDs of network devices removed from the Maintenance list.

11. The system of claim 10, wherein the Error list further comprises sub-lists for errors that may be corrected by the datacenter operator, and for errors linked to a faulty network device.

12. The system of any of the claims 8 to 11, wherein the Network Upgrade Tool is further configured to adjust the number of Clusterᵢⱼₖ clusters handled in parallel to minimize the downtime of the datacenter.

13. The system of any of the claims 8 to 12, wherein the Network Upgrade Tool is further configured to adjust the order in which Clusterᵢⱼₖ clusters are handled to optimize the continuation of services to clients of an organization that deploys, controls and maintains the datacenter.

14. The system of any of the claims 8 to 13, wherein the redundancy and size rules are hardcoded in the Network Upgrade Tool.

15. A computer-readable medium comprising instructions causing a computing system to perform the method of any of the claims 1 to 7.

## Patentansprüche

1. Verfahren zur Wartung von Netzwerkvorrichtungen in einem Rechenzentrum, umfassend:
- Sammeln (201) für jede der Netzwerkvorrichtungen auf einer Wartungsliste:
- einer virtuellen Kennung, die der Netzwerkvorrichtung eindeutig zugeordnet ist, MANAGEMENT IP;
- einer Information, die den tatsächlichen physischen Standort der Netzwerkvorrichtung darstellt, LOCATION; und
- Schlüsselwert-Tupeln, die der Netzwerkvorrichtung zugeordnet sind, Tags, wobei der Schlüssel einer der Folgenden ist:
- eine Information, die ein Unternehmen oder ein Produkt darstellt, für das die Netzwerkvorrichtung im Rechenzentrum, BU, verwendet wird;
- eine Information, die einen Ort und eine Funktion darstellt, den bzw. die die Netzwerkvorrichtung in dem Rechenzentrum einnimmt, ROLE; und
- eine Information, die eine Version oder Generation des Rechenzentrums darstellt, in dem die Netzwerkvorrichtung betrieben wird, INFRA; und wobei der Wert ein tatsächlicher Datenwert oder ein Zeiger auf den Datenwert für den Schlüssel ist;
- Abrufen (202) eines Hardwaremodells und einer aktuellen Netzwerkbetriebssystemebene der Netzwerkvorrichtung unter Verwendung der jeweiligen MANAGEMENT IP für jede der Netzwerkvorrichtungen auf der Wartungsliste;
- Entfernen (203) von Netzwerkvorrichtungen mit nicht unterstütztem Hardwaremodell oder aktueller Netzwerk-Betriebssystemversion oder mit einem Fehler in einem ihrer jeweiligen zugeordneten Tags BU, ROLE und INFRA oder in einer von ihrer LOCATION;
- Clustern (204) der verbleibenden Netzwerkvorrichtungen auf der Wartungsliste in i Cluster BUᵢ derjenigen Netzwerkvorrichtungen mit demselben Wert des BU-Schlüssels in einem ihrer zugeordneten Tags, j Cluster ROLEⱼ innerhalb der BUᵢ-Cluster derjenigen Netzwerkvorrichtungen mit den gleichen Wert des ROLE-Schlüssels in einem ihrer zugeordneten Tags und k Cluster Clusterᵢⱼₖ innerhalb der ROLEⱼ-Cluster derjenigen Netzwerkvorrichtungen mit dem gleichen Wert des INFRA-Schlüssels in einem ihrer zugeordneten Tags;
- Erstellen (205) von Gruppen von Netzwerkvorrichtungen, die redundant sind, innerhalb jedes Clusterᵢⱼₖ-Clusters, und:
- Überprüfen (205), dass die Anzahl der redundanten Netzwerkvorrichtungen in jeder erstellten Gruppe mit einer ersten Anzahl übereinstimmt, die gemäß Redundanzregeln für INFRAₖ gilt;
- Überprüfen (206), dass die Anzahl der Netzwerkvorrichtunge in jeder erstellten Gruppe mit einer zweiten Anzahl übereinstimmt, die gemäß Größenregeln für eine Kombination BUᵢ - ROLEⱼ - INFRAₖ gilt; und
- Überprüfen (206), dass LOCATION für alle Netzwerkvorrichtungen in jeder erstellten Gruppe gleich ist;
- Entfernen (207) von Netzwerkvorrichtungen aus der Wartungsliste, die in einer Gruppe vorhanden und redundant sind, und zwar in einer Anzahl, die nicht mit der ersten Anzahl übereinstimmt, die in einer Gruppe in einer Anzahl vorhanden sind, die nicht mit der zweiten Anzahl übereinstimmt, oder die in einer Gruppe vorhanden sind und bei denen LOCATION nicht gleich ist; und
- sukzessives Upgraden (208) unter Verwendung von Upgrade-Regeln und der jeweiligen MANAGEMENT IP der verbleibenden Netzwerkvorrichtungen in jeder erstellten Gruppe für alle Gruppen in allen Clusterᵢⱼₖ-Clustern von der aktuellen Version des Netzwerkbetriebssystems auf eine Zielversion des Betriebssystems.

2. Verfahren nach Anspruch 1, wobei das Sammeln und Abrufen unter Verwendung einer eindeutigen Kennung durchgeführt wird, die durch einen Rechenzentrumsbetreiber bei der Bereitstellung des Rechenzentrums jeder einzelnen der Netzwerkvorrichtungen auf der Wartungsliste zugewiesen wird und beliebigen von seinen zugeordneten Tags und MANAGEMENT IP und LOCATION zugeordnet wird.

3. Verfahren nach Anspruch 1 oder 2, wobei das Entfernen aus der Wartungsliste ferner Entfernen von Netzwerkvorrichtungen umfasst, die nicht genau einen Wert für die einzelnen Tags BU, ROLE und INFRA aufweisen.

4. Verfahren nach Anspruch 2 oder 3 bei Abhängigkeit von Anspruch 2, wobei das Entfernen aus der Wartungsliste ferner Erstellen einer Fehlerliste umfasst, die mit den eindeutigen Kennungen der entfernten Netzwerkvorrichtungen gefüllt ist.

5. Verfahren nach Anspruch 4, wobei die Fehlerliste ferner Unterlisten für Fehler, die durch den Rechenzentrumsbetreiber korrigiert werden können, und für Fehler umfasst, die mit einer fehlerhaften Netzwerkvorrichtung verknüpft sind.

6. Verfahren nach einem der Ansprüche 1 bis 5, wobei das sukzessive Upgraden ferner Anpassen der Anzahl der parallel verarbeiteten Clusterᵢⱼₖ-Cluster umfasst, um die Ausfallzeit des Rechenzentrums zu minimieren.

7. Verfahren nach einem der Ansprüche 1 bis 6, wobei das sukzessive Upgraden ferner Anpassen der Reihenfolge umfasst, in der Clusterᵢⱼₖ-Cluster gehandhabt werden, um die Fortsetzung der Dienste an Kunden einer Organisation zu optimieren, die das Rechenzentrum bereitstellt, steuert und wartet.

8. System zur Wartung von Netzwerkvorrichtungen in einem Rechenzentrum, wobei das System ein Netzwerk-Upgrade-Tool (100), gekoppelt an einer CMDB (103), eine Regel-DB (112), eine Upgrade-Pfad-DB (104) und einen Netzwerkkonfigurator (105) umfasst, wobei das Netzwerk-Upgrade-Tool zu Folgendem konfiguriert ist:
- Sammeln (201) von der CMDB für jede der Netzwerkvorrichtungen auf einer Wartungsliste:
- einer virtuellen Kennung, die der Netzwerkvorrichtung eindeutig zugeordnet ist, MANAGEMENT IP;
- einer Information, die den tatsächlichen physischen Standort der Netzwerkvorrichtung darstellt, LOCATION; und
- Schlüsselwert-Tupeln, die der Netzwerkvorrichtung zugeordnet sind, Tags, wobei der Schlüssel einer der Folgenden ist:
- eine Information, die ein Unternehmen oder ein Produkt darstellt, für das die Netzwerkvorrichtung im Rechenzentrum, BU, verwendet wird;
- eine Information, die einen Ort und eine Funktion darstellt, den bzw. die die Netzwerkvorrichtung in dem Rechenzentrum einnimmt, ROLE; und
- eine Information, die eine Version oder Generation des Rechenzentrums darstellt, in dem die Netzwerkvorrichtung betrieben wird, INFRA; und wobei der Wert ein tatsächlicher Datenwert oder ein Zeiger auf den Datenwert für den Schlüssel ist;
- Abrufen (202) eines Hardwaremodells und einer aktuellen Netzwerkbetriebssystemebene der Netzwerkvorrichtung unter Verwendung der jeweiligen MANAGEMENT IP für jede der Netzwerkvorrichtungen auf der Wartungsliste;
- Entfernen (203) von Netzwerkvorrichtungen mit nicht unterstütztem Hardwaremodell oder aktueller Netzwerk-Betriebssystemversion oder mit einem Fehler in einem ihrer jeweiligen zugeordneten Tags BU, ROLE und INFRA oder in einer von ihrer LOCATION;
- Clustern (204) der verbleibenden Netzwerkvorrichtungen auf der Wartungsliste in i Cluster BUᵢ derjenigen Netzwerkvorrichtungen mit demselben Wert des BU-Schlüssels in einem ihrer zugeordneten Tags, j Cluster ROLEⱼ innerhalb der BUᵢ-Cluster derjenigen Netzwerkvorrichtungen mit den gleichen Wert des ROLE-Schlüssels in einem ihrer zugeordneten Tags und k Cluster Clusterᵢⱼₖ innerhalb der ROLEⱼ-Cluster derjenigen Netzwerkvorrichtungen mit dem gleichen Wert des INFRA-Schlüssels in einem ihrer zugeordneten Tags;
- Erstellen (205) von Gruppen von Netzwerkvorrichtungen, die gemäß Redundanzregeln, die aus der Rules DB gesammelt werden, die für INFRAₖ gilt, redundant sind, innerhalb jedes Clusterᵢⱼₖ-Clusters, und
- Überprüfen (205), dass die Anzahl der redundanten Netzwerkvorrichtungen in jeder erstellten Gruppe mit einer ersten Anzahl übereinstimmt, die gemäß Redundanzregeln für INFRAₖ gilt;
- Überprüfen (206), dass die Anzahl der Netzwerkvorrichtunge in jeder erstellten Gruppe mit einer zweiten Anzahl übereinstimmt, die gemäß Größenregeln für eine Kombination BUᵢ - ROLEⱼ - INFRAₖ gilt; und
- Überprüfen (206), dass LOCATION für alle Netzwerkvorrichtungen in jeder erstellten Gruppe gleich ist;
- Entfernen (207) von Netzwerkvorrichtungen aus der Wartungsliste, die in einer Gruppe vorhanden und redundant sind, und zwar in einer Anzahl, die nicht mit der ersten Anzahl übereinstimmt, die in einer Gruppe in einer Anzahl vorhanden sind, die nicht mit der zweiten Anzahl übereinstimmt, oder die in einer Gruppe vorhanden sind und bei denen LOCATION nicht gleich ist; und
- sukzessives Upgraden (208) durch den Netzwerkkonfigurator unter Verwendung von Upgrade-Regeln, die von dem Upgrade-Pfad gesammelt wurden, und der jeweiligen MANAGEMENT IP der verbleibenden Netzwerkvorrichtungen in jeder erstellten Gruppe für alle Gruppen in allen Clusterᵢⱼₖ-Clustern von der aktuellen Version des Netzwerkbetriebssystems auf eine Zielversion des Betriebssystems.

9. System nach Anspruch 8, wobei das Netzwerk-Upgrade-Tool ferner zum Sammeln und Abrufen unter Verwendung einer eindeutigen Kennung konfiguriert ist, die durch einen Rechenzentrumsbetreiber bei der Bereitstellung des Rechenzentrums jeder einzelnen der Netzwerkvorrichtungen auf der Wartungsliste zugewiesen wird und beliebigen von seinen zugeordneten Tags und MANAGEMENT IP und LOCATION zugeordnet wird.

10. System nach Anspruch 8 oder 9 bei Abhängigkeit von Anspruch 8, wobei das Netzwerk-Upgrade-Tool ferner zum Erstellen einer Fehlerliste konfiguriert ist, die mit den eindeutigen Kennungen der Netzwerkvorrichtunge gefüllt ist, die aus der Wartungsliste entfernt wurden.

11. System nach Anspruch 10, wobei die Fehlerliste ferner Unterlisten für Fehler, die durch den Rechenzentrumsbetreiber korrigiert werden können, und für Fehler umfasst, die mit einer fehlerhaften Netzwerkvorrichtung verknüpft sind.

12. System nach einem der Ansprüche 8 bis 11, wobei das Netzwerk-Upgrade-Tool ferner zum Anpassen der Anzahl der parallel verarbeiteten Clusterᵢⱼₖ-Cluster konfiguriert ist, um die Ausfallzeit des Rechenzentrums zu minimieren.

13. System nach einem der Ansprüche 8 bis 12, wobei das Netzwerk-Upgrade-Tool ferner zum Anpassen der Reihenfolge konfiguriert ist, in der Clusterᵢⱼₖ-Cluster gehandhabt werden, um die Fortsetzung der Dienste für Kunden einer Organisation zu optimieren, die das Rechenzentrum bereitstellt, steuert und wartet.

14. System nach einem der Ansprüche 8 bis 13, wobei die Redundanz- und Größenregeln im Network-Upgrade-Tool fest codiert sind.

15. Computerlesbares Medium, das Anweisungen umfasst, die ein Rechensystem veranlassen, das Verfahren gemäß einem der Ansprüche 1 bis 7 durchzuführen.

## Revendications

1. Procédé de maintenance de dispositifs de réseau dans un centre de données, comprenant :
- la collecte (201) pour chacun des dispositifs de réseau d'une liste de Maintenance :
- une identification virtuelle associée de manière unique au dispositif de réseau, IP de GESTION ;
- une information représentative de l'emplacement physique réel du dispositif de réseau, EMPLACEMENT ; et
- des tuples clé-valeur associés au dispositif de réseau, Balises, dans lesquels la clé est l'une :
- d'une information représentative d'une entreprise ou d'un produit offrant le dispositif de réseau qui est utilisée dans le centre de données, BU ;
- d'une information représentative d'une place et d'une fonction que le dispositif de réseau occupe dans le centre de données, ROLE ; et
- d'une information représentative d'une version ou d'une génération du centre de données dans lequel le dispositif de réseau fonctionne, INFRA ; et dans lequel la valeur est une donnée réelle ou un pointeur vers les données pour la clé ;
- l'extraction (202) pour chacun des dispositifs de réseau de la liste de Maintenance, à l'aide de l'IP de GESTION respective, d'un modèle matériel et d'un niveau de système d'exploitation réseau actuel du dispositif de réseau ;
- la suppression (203) de la liste de Maintenance des dispositifs de réseau avec un modèle matériel ou un niveau de système d'exploitation réseau actuel non pris en charge, ou avec une erreur dans l'une de leurs Balises BU, ROLE et INFRA associées respectives, ou dans l'un quelconque de leur EMPLACEMENT ;
- le regroupement (204) des dispositifs de réseau restants sur la liste de Maintenance, en i clusters BUᵢ de ces dispositifs de réseau ayant la même valeur de clé BU dans l'une de leurs Balises associées, en j clusters ROLEⱼ au sein des clusters BUᵢ, de ces dispositifs de réseau ayant la même valeur de clé ROLE dans l'une de leurs Balises associées, et en k clusters Clusterᵢⱼₖ au sein des clusters ROLEⱼ de ces dispositifs de réseau ayant la même valeur de clé INFRA dans l'une de leurs Balises associées ;
- la création (205) au sein de chaque cluster Clusterᵢⱼₖ, de Groupes de dispositifs de réseau redondants, et :
- la vérification (205) que le nombre de dispositifs de réseau redondants dans chaque Groupe créé correspond à une première quantité applicable, selon les règles de redondance, à INFRAₖ ;
- la vérification (206) que le nombre de dispositifs de réseau dans chaque Groupe créé correspond à une seconde quantité applicable, selon les règles de taille, à une combinaison BUᵢ - ROLEⱼ - INFRAₖ ; et
- la vérification (206) que tous les dispositifs de réseau de chaque Groupe créé partagent le même EMPLACEMENT ;
- la suppression (207) de la liste de Maintenance des dispositifs de réseau présents et redondants dans un Groupe en une quantité qui ne correspond pas à la première quantité, présents dans un Groupe en une quantité qui ne correspond pas à la seconde quantité, ou présents dans un Groupe et ne partageant pas le même EMPLACEMENT ; et
- la mise à niveau successive (208), à l'aide de règles de mise à niveau et de l'IP de GESTION respective, des dispositifs de réseau restants dans chaque Groupe créé, pour tous les Groupes au sein de tous les clusters Clusterᵢⱼₖ, depuis la version actuelle du système d'exploitation réseau vers une version ciblée du système d'exploitation.

2. Procédé selon la revendication 1, dans lequel la collecte et l'extraction sont réalisées à l'aide d'un identifiant unique attribué par un opérateur de centre de données lors du déploiement du centre de données à chacun des dispositifs de réseau de la liste de Maintenance, et associé à l'une quelconque de ses Balises associées, et l'IP de GESTION et l'EMPLACEMENT.

3. Procédé selon la revendication 1 ou 2, dans lequel la suppression de la liste de Maintenance comprend également la suppression des dispositifs de réseau n'ayant pas exactement une valeur pour chacune des Balises BU, ROLE et INFRA.

4. Procédé selon la revendication 2, ou 3 lorsqu'elle dépend de la revendication 2, dans lequel la suppression de la liste de Maintenance comprend également la création d'une liste d'Erreurs remplie avec les identifiants uniques des dispositifs de réseau supprimés.

5. Procédé selon la revendication 4, dans lequel la liste d'Erreurs comprend également des sous-listes d'erreurs susceptibles d'être corrigées par l'opérateur du centre de données, et d'erreurs liées à un dispositif de réseau défaillant.

6. Procédé selon l'une quelconque des revendications 1 à 5, dans lequel la mise à niveau successive comprend également l'ajustement du nombre de clusters Clusterᵢⱼₖ gérés en parallèle pour minimiser le temps d'arrêt du centre de données.

7. Procédé selon l'une quelconque des revendications 1 à 6, dans lequel la mise à niveau successive comprend également l'ajustement de l'ordre dans lequel les clusters Clusterᵢⱼₖ sont gérés pour optimiser la continuité des services aux clients d'une organisation qui déploie, contrôle et entretient le centre de données.

8. Système de maintenance de dispositifs de réseau dans un centre de données, le système comprenant un Outil de mise à niveau de réseau (100) couplé à une CMDB (103), une Base de données de règles (112), une Base de données de chemins de mise à niveau (104) et un Configurateur de réseau (105), l'Outil de mise à niveau du réseau étant configuré pour :
- collecter (201) à partir de la CMDB pour chacun des dispositifs de réseau d'une liste de Maintenance :
- une identification virtuelle associée de manière unique au dispositif de réseau, IP de GESTION ;
- une information représentative de l'emplacement physique réel du dispositif de réseau, EMPLACEMENT ; et
- des tuples clé-valeur associés au dispositif de réseau, Balises, dans lesquels la clé est l'une :
- d'une information représentative d'une entreprise ou d'un produit offrant le dispositif de réseau qui est utilisée dans le centre de données, BU ;
- d'une information représentative d'une place et d'une fonction que le dispositif de réseau occupe dans le centre de données, ROLE ; et
- d'une information représentative d'une version ou d'une génération du centre de données dans lequel le dispositif de réseau fonctionne, INFRA ; et dans lequel la valeur est une donnée réelle ou un pointeur vers les données pour la clé ;
- extraire (202) pour chacun des dispositifs de réseau de la liste de Maintenance, à l'aide de l'IP de GESTION respective, un modèle matériel et un niveau de système d'exploitation réseau actuel du dispositif de réseau ;
- supprimer (203) de la liste de Maintenance des dispositifs de réseau avec un modèle matériel ou un niveau de système d'exploitation réseau actuel non pris en charge, ou avec une erreur dans l'une quelconque de leurs Balises BU, ROLE et INFRA associées respectives, ou dans l'un quelconque de leur EMPLACEMENT ;
- regrouper (204) les dispositifs de réseau restants sur la liste de maintenance, en i clusters BUᵢ de ces dispositifs de réseau ayant la même valeur de clé BU dans l'une de leurs balises associées, en j clusters ROLEⱼ au sein des clusters BUᵢ, de ces dispositifs de réseau ayant la même valeur de clé ROLE dans l'une de leurs Balises associées, et en k clusters Clusterᵢⱼₖ au sein des clusters ROLEⱼ de ces dispositifs de réseau ayant la même valeur de clé INFRA dans l'une de leurs Balises associées ;
- créer (205) au sein de chaque cluster Clusterᵢⱼₖ, des Groupes de dispositifs de réseau redondants selon les règles de redondance collectées à partir de la Base de données de règles applicables à INFRAₖ ; et
- vérifier (205) que le nombre de dispositifs de réseau redondants dans chaque Groupe créé correspond à une première quantité applicable, selon les règles de redondance, à INFRAₖ ;
- vérifier (206) que le nombre de dispositifs de réseau dans chaque Groupe créé correspond à une seconde quantité applicable, selon les règles de taille, à une combinaison BUᵢ - ROLEⱼ - INFRAₖ ; et
- vérifier (206) que tous les dispositifs de réseau de chaque Groupe créé partagent le même EMPLACEMENT ;
- supprimer (207) de la liste de Maintenance des dispositifs de réseau présents et redondants dans un Groupe en une quantité qui ne correspond pas à la première quantité, présents dans un Groupe en une quantité qui ne correspond pas à la seconde quantité, ou présents dans un Groupe et ne partageant pas le même EMPLACEMENT ; et
- mettre successivement à niveau (208), par l'intermédiaire du Configurateur de Réseau, à l'aide de règles de mise à niveau collectées dans la Base de données des Chemins de Mise à niveau et de l'IP de GESTION respective, les dispositifs de réseau restants dans chaque Groupe créé, pour tous les Groupes au sein de tous les clusters Clusterᵢⱼₖ, depuis la version actuelle du système d'exploitation réseau vers une version ciblée du système d'exploitation.

9. Système selon la revendication 8, dans lequel l'Outil de mise à niveau du réseau est en outre configuré pour collecter et extraire à l'aide d'un identifiant unique attribué par un opérateur de centre de données lors du déploiement du centre de données à chacun des dispositifs de réseau de la liste de Maintenance, et associé à l'un quelconque de ses Balises associées, ainsi que l'IP de GESTION et l'EMPLACEMENT.

10. Système selon la revendication 8, ou 9 lorsqu'elle dépend de la revendication 8, dans lequel l'Outil de mise à niveau du réseau est en outre configuré pour créer une liste d'Erreurs remplie avec les identifiants uniques des dispositifs de réseau supprimés de la liste de Maintenance.

11. Système selon la revendication 10, dans lequel la liste d'Erreurs comprend également des sous-listes d'erreurs susceptibles d'être corrigées par l'opérateur du centre de données, et d'erreurs liées à un dispositif de réseau défaillant.

12. Système selon l'une quelconque des revendications 8 à 11, dans lequel l'Outil de mise à niveau du réseau est en outre configuré pour ajuster le nombre de clusters Clustersᵢⱼₖ gérés en parallèle afin de minimiser le temps d'arrêt du centre de données.

13. Système selon l'une quelconque des revendications 8 à 12, dans lequel l'Outil de mise à niveau du réseau est en outre configuré pour ajuster l'ordre dans lequel les clusters Clustersᵢⱼₖ sont gérés afin d'optimiser la continuité des services aux clients d'une organisation qui déploie, contrôle et entretient le centre de données.

14. Système selon l'une quelconque des revendications 8 à 13, dans lequel les règles de redondance et de taille sont codées en dur dans l'Outil de mise à niveau de réseau.

15. Support lisible par ordinateur comprenant des instructions permettant à un système informatique de réaliser le procédé selon l'une quelconque des revendications 1 à 7.
